# EUROPEAN PATENT APPLICATION

(11) **EP 4 465 397 A1**
(43) Date of publication of application: **20.11.2024**
(21) Application number: 24175471.2
(22) Date of filing: 13.05.2024
(51) Int. Cl.: H01M 10/04, B65H 18/08, B65H 18/02

(54) **WINDING APPARATUS AND METHOD FOR WINDING ONE OR MORE STRIP-SHAPED SEPARATORS AND ELECTRODE FOILS TO EACH OTHER**

(30) Priority: 16.05.2023 IT 202300009894
(71) Applicant: G.D S.p.A., 40133 Bologna (BO) (IT)
(72) Inventor: NOFERINI, Giacomo, I-40133 Bologna (BO) (IT)
(74) Representative: Porta & Consulenti Associati S.p.A.

(57) **Abstract**

A winding apparatus (1) for winding one or more strip-like separators and electrode foils to each other comprises a loading station (LS); a plurality of transfer devices (5) wherein each transfer device (5) is configured to receive and transfer an electrode foil or strip-like separator and wherein the transfer devices (5) are arranged in sequence along a loading path (LP) in the loading station (LS); a first collecting assembly (13a) movable along the loading path (LP) and comprising a support structure (20) on which a plurality of collecting devices (14) are arranged. Each collecting device (14) is rotatable about its own winding axis (A2) relative to the support structure (20) and is configured to receive from a transfer device (5) an electrode foil or a strip-like separator. The support structure (20) rotates about its own support axis (A5) at least when it is in the loading station (LS) to face each collecting device (14), one after the other, to a corresponding transfer device (5).

## Description

The present invention relates to a winding apparatus for winding one or more strip-like separators and electrode foils to each other and a method for winding one or more strip-like separators and electrode foils to each other.

The present invention is particularly usable in a process for making electrochemical cells, for example secondary electrochemical cells, comprising electrodes separated from each other by a dielectric separator. The present invention can also be used in a process to make electrical capacitors.

One type of electrochemical cell, known as a jelly roll or Swiss roll, involves a strip-like separator being interposed between two electrode foils, specifically an anode and a cathode, and the multilayer consisting of the separator and electrode foils being wound to form a cylindrical or quasi-cylindrical electrochemical cell.

In the Applicant's experience, winding apparatuses with a winding mandrel that can be rotated about its own longitudinal axis are used to make this type of electrochemical cell. Free ends of the electrode foils and the strip-like separator are coupled to the winding mandrel, which is rotated about its longitudinal axis, causing the electrode foils and separator to wind around each other and onto the winding mandrel. The strip-like separator and electrode foils are continuously unwound from respective reels.

In the Applicant's experience, in order to feed the electrode foils and the strip-like separator to the winding mandrel, it is possible to set up winding apparatuses whereby sections of electrode foil and a section of strip-like separator are wound onto respective temporary collecting rollers and brought to a respective winding mandrel where the free ends of the electrode foils and the strip-like separator are associated with the winding mandrel. The winding mandrel is driven in rotation, performing the jelly roll winding of the electrode foils and the strip-like separator.

In particular, it is possible to provide for a plurality of collecting assemblies mounted on a rotary member with continuity about a respective axis of rotation. It is also possible to provide a loading station in which four transfer rollers (arranged tangential to the periphery of the rotary member) receive two electrode foils and two separator strips respectively, and transfer sections of the two electrode foils and the two separator strips to four collecting rollers of the same collecting assembly.

This can be achieved by making the transfer rollers integral with an oscillating frame hinged in the axis of rotation of the rotary member and by making the axes of rotation of two collecting rollers movable with respect to the axes of rotation of the other two collecting rollers of the same assembly. During the rotation of the rotary member, each collecting roller of an assembly is arranged tangential to a respective transfer roller (moving the axes of rotation of two collecting rollers) and the oscillating frame is driven to move the four transfer rollers at the same speed as the rotary member. During the stroke of the oscillating frame, the collecting rollers remain tangential to the respective transfer rollers and the sections of electrode foils and of separator strips are transferred to the respective collecting rollers. Once the winding of the collecting rollers has been completed, the axes of rotation of two collecting rollers are moved to arrange the four collecting rollers around the winding mandrel. At the same time, the oscillating frame is returned to its initial position by performing a return stroke. The winding mandrel then starts winding the electrode foils and separator strips by taking them from the four collecting rollers arranged around it, and when the oscillating frame returns to its initial position, it is activated on a new collecting assembly.

With each rotation of the rotary member, a collecting assembly receives respective sections of electrode foils and separator strips, and the corresponding winding mandrel receives these sections of electrode foils and separator strips from the collecting rollers and winds them together.

The Applicant has noted that there is a growing need to increase the production rate of electrochemical cells, in particular to increase the number of electrochemical cells produced in a unit of time.

The Applicant has noted that in a winding apparatus of the type summarised above, the time required to complete the winding of an electrochemical cell is given by:
- a preparation time required for all the collecting rollers of the same collecting assembly to change their arrangement pattern with respect to the winding mandrel in order to be simultaneously tangential to the respective transfer rollers, and for the collecting rollers of that assembly to change their pattern again in order to be arranged around the respective winding mandrel once the sections of electrode foils and separator strip have been received from the respective transfer rollers;
- by the transfer time required to transfer the sections of electrode foils and separator strips from the respective transfer rollers to the collecting rollers;
- by the winding time required to unwind the sections of electrode foils and separator strips from the collecting rollers and wind them around the winding mandrel.

The Applicant has noted that during the preparation time the collecting rollers of a collecting assembly are basically inactive, in the sense that they are not performing any action on the sections of electrode foils and separator strips.

The Applicant has perceived that if such a preparation time could be eliminated or at least decreased, it would be possible, all things being equal (rotation speed and size of the rotary member, transfer time and winding time), to increase the number of electrochemical cells produced in the unit of time by, for example, increasing the number of collecting assemblies associated with the rotary member.

The Applicant found that by transferring electrode foils and separator strips from transfer devices to collecting devices of the same collecting assembly in such a way that the electrode foils and separator strips are transferred at different and successive times to the respective collecting devices of the same collecting assembly, it would be possible to temporally couple each collecting device to the respective transfer device one after the other without the need to reconfigure the collecting devices according to a configuration allowing them to be coupled to the transfer devices at the same time.

The Applicant has verified that this eliminates the aforementioned preparation time as the collecting devices of each collecting assembly are arranged in the same pattern both during the transfer of the electrode foils and the separator strips from the transfer devices to the collecting devices, and during the unwinding of the electrode foils and separator strips from the collecting devices and subsequent winding around the winding mandrel.

The present invention therefore relates, in a first aspect thereof, to a winding apparatus for winding one or more strip-like separators and electrode foils together.

Preferably, a loading station is provided.

Preferably, there is a plurality of transfer devices wherein each transfer device is configured to receive and transfer an electrode foil or strip-like separator.

Preferably, the transfer devices are arranged in sequence along a loading path in said loading station.

Preferably, a first collecting assembly is movable along said loading path and comprising a support structure on which a plurality of collecting devices are arranged.

Preferably, each collecting device is rotatable about its own winding axis relative to the support structure and is configured to receive from a transfer device an electrode foil or a strip-like separator.

Preferably, said support structure rotates about its own support axis at least when it is in said loading station to have each collecting device face, one after the other, a corresponding transfer device.

The present invention relates, in a second aspect thereof, to a method for winding one or more strip-like separators and electrode foils together.

Preferably, it is provided to feed the strip-like elements each of which defining an electrode foil or a strip-like separator to respective transfer devices.

Preferably, it is provided to transfer each strip-like element in separate and successive time instants from the respective transfer device to a respective first collecting assembly.

Preferably, it is provided to unwind the strip-like elements from each collecting device of the first collecting assembly and wind them onto a winding mandrel.

The Applicant has verified that by transferring in separate and successive time instants each strip-like element from the respective transfer device to a respective collecting device, during the time required for the support structure to travel along the loading path, it is possible to face all the collecting devices to a respective transfer device and thus transfer strip-like elements to all collecting devices of a collecting assembly.

"Strip-like element" means an electrode foil or separator strip.

"Electrode foil" means a strip or foil having two much larger dimensions than a third dimension. The electrode foil can be a monolithic strip (or foil) or a strip consisting of a plurality of layers joined together of identical or different materials, possibly coated at least partially with an active electrode material. The electrode foil also has characteristics that allow a certain amount of bending during its use.

A "separator strip" is defined as a strip with one dimension much larger than two further dimensions, where a first dimension of those two further dimensions is much larger than a second dimension of those two further dimensions. The strip may be monolithic or made up of a plurality of layers joined together of identical or different materials. The separator tape is made of or coated with dielectric material. The separator strip also has characteristics that allow a certain amount of bending during its use.

"Active electrode material" may be an anodic or cathodic material and may comprise, by way of example, in the case of anodic material, graphite or other carbonaceous materials or silicon-based materials and, in the case of cathodic material, lithium oxide, nickel, manganese, cobalt, aluminium or lithium and iron phosphate-based materials.

"Contact between a collecting device and a transfer device" means that the collecting device contacts the transfer device either directly or by interposing a strip-like element between the collecting device and the transfer device.

"Collecting device facing a transfer device" means that the collecting device is placed in correspondence and preferably in contact with the transfer device.

The present invention can have at least one of the preferred features described below. Such features may be present individually or in combination with each other, unless expressly stated otherwise, both in the winding apparatus and in the method for winding of the present invention.

A plurality of collecting assemblies is preferably provided.

Preferably, the winding axes of the collecting devices rotate about said support axis of the support structure at least when they are in said loading station.

Preferably, the winding axes of the collecting devices rotate about said support axis of the support structure drawn in rotation by the rotation of the support structure about its support axis.

Preferably, each collecting device comprises a winding pivot crossed by the winding axis of the collecting device.

Preferably, each winding pivot is connected to the support structure.

Preferably, each collecting device comprises a collecting roller that can be rotated about a respective winding pivot.

Preferably, each winding pivot is crossed by a respective winding axis and runs parallel to the respective winding axis.

Preferably, the winding axes of the collecting devices of the first collecting unit are parallel to each other.

Preferably, the support structure is configured to support each collecting device and to rotate it about the support axis of the support structure.

Preferably, the support axis of the support structure is parallel to the winding axes of the collecting devices.

Preferably, the winding axes of the collecting devices are arranged around the support axis of the support structure.

Preferably, the winding axes of the collecting devices are arranged along a circumference surrounding the support axis of the support structure.

Preferably, the winding axes of the collecting devices are arranged along a circumference having its centre crossed by the support axis of the support structure.

Preferably, the winding axes are angularly spaced around the support axis of the support structure.

Preferably, the winding axes are angularly spaced apart by angular distances that remain unchanged at least when the support structure travels along the loading path.

Preferably, the winding axes are angularly spaced apart by angular distances that remain unchanged.

Preferably, the rotation of the support structure about the support axis takes place, at least in the loading station, without varying the angular distances between the winding axes.

To enable the support structure to travel along the loading path, it is preferably rotatable about a transport axis.

Preferably, said support structure rotates about its own support axis and about said transport axis at least when the collecting assembly travels along the loading path.

In this way, in the loading station each collecting device rotates simultaneously about its own winding axis, about the support axis of the support structure and about the transport axis.

The transport axis is preferably parallel to the support axis of the support structure.

The transport axis is preferably separate and spaced apart from the support axis of the support structure.

The rotation of the support structure about the transport axis defines an essentially circular path for the support structure. A portion of this essentially circular path defines the loading path.

Preferably, the loading path is a path that runs along an arc of circumference.

Preferably, the transport axis is parallel and crossed by a motorised transport shaft.

Preferably, the support structure is connected to the motorised transport shaft so that it can travel along the loading path.

Preferably, the transfer devices are arranged along the arc of circumference that defines the loading path.

Preferably, the loading station comprises an adhesive tape feeder.

Preferably, the adhesive tape feeder comprises a reel of adhesive tape and a knife.

The rotation of the support structure about the support axis (which results in the rotation of the winding axes about the support axis), faces the collecting devices one after the other to the transfer devices. The rotation of the collecting devices about their winding axes allows the strip-like elements to be wound around the collecting devices.

Preferably, when a collecting device of said first collecting assembly is facing a respective transfer device, the other collecting devices of said first collecting assembly are not facing any transfer device.

Preferably, each transfer device is rotatable about its own transfer axis.

Preferably, each transfer axis is parallel to the winding axes of the collecting devices.

Preferably, each transfer device comprises at least one transfer roller rotatable about a transfer pivot. The transfer pivot is parallel to the winding axes.

Preferably, each transfer device is configured to retain and pull at least a portion of the strip-like element and to deliver the portion of the strip-like element to a respective collecting device.

For this purpose, at least one portion of each transfer device may include a suction device that can be activated on a portion of the strip-like element.

Preferably, a cutting device is provided at each transfer device to cut the incoming strip-like element at the transfer device and make a section of strip-like element that will be transferred to the collecting device.

Preferably, each collecting device comprises a retaining device for retaining at least a portion of strip-like element transferred from the transfer device and allow the strip-like element to be wound onto the collecting device.

Preferably, the transfer devices do not make movements in the direction of the loading path.

Preferably, a portion of adhesive tape is fed to a collecting device and partially overlapped with an end portion of the strip-like element that will be transferred to that collecting device.

Preferably, said portion of adhesive tape is fed to a single collecting device.

Preferably, such a strip-like element is a separator strip.

Preferably, at least one winding mandrel is provided for winding electrode foils and strip-like separators received from said plurality of collecting devices together.

Preferably, each collecting assembly comprises a winding mandrel.

The winding mandrel has the function of winding the strip-like elements wound onto the collecting devices of the same collecting assembly together and forming a jelly roll winding.

Preferably, said collecting devices are arranged around said winding mandrel at least when the collecting assembly travels along the loading path.

The winding mandrel can be rotated about a forming axis parallel to the winding axes of the collecting devices and crossed by the support axis of the support structure.

This forming axis preferably coincides with the support axis of the support structure.

Preferably, there is an unwinding path traversed by said first collecting assembly after having traversed the loading path.

Preferably, the unwinding path is subsequent to the loading path.

Preferably, the unwinding path is one that runs along an arc of a circle.

A portion of the essentially circular path determined by the rotation of the support structure around the transport axis defines the unwinding path.

During the unwinding path, the strip-like elements are transferred from the collecting devices to the winding mandrel and are wound around the winding mandrel.

Preferably, the collecting devices are arranged and configured to transfer electrode foils and strip-like separators to said winding mandrel as they traverse the unwinding path.

The winding mandrel can comprise two half-parts that can be moved towards and away from each other to enable the retention of free ends of the strip-like elements the during jelly roll winding of the strip-like elements.

Preferably, there is an extraction path traversed by said first collecting assembly after having traversed the unwinding path.

While traversing the extraction path, the strip-like elements wound around the winding mandrel are extracted from the winding mandrel and transferred to subsequent processing stations.

Preferably, the first collecting assembly comprises four collecting devices.

In this embodiment, four transfer devices are preferably provided.

Preferably, there is one transfer device for a first electrode foil, one transfer device for a second electrode foil and two transfer devices for two separator strips.

Preferably the four collecting devices are angularly equidistant around the support axis of the support structure.

In order to maximize the number of strip-like elements transferred to collecting devices in the unit of time, a plurality of collecting assemblies is preferably provided, each of which is movable along said loading path and each of which comprises a respective support structure on which a plurality of collecting devices is arranged.

Preferably, each collecting device of a collecting assembly is rotatable about its own winding axis relative to the support structure and is configured to receive from a transfer device an electrode foil or a strip-like separator.

Preferably, the support structure of each collecting assembly rotates about its own support axis at least when it is in said loading station to have each collecting device face, one after the other, a corresponding transfer device.

Preferably, each collecting assembly of said plurality of collecting assemblies is structurally and functionally the same as the first collecting assembly.

Preferably, the collecting assemblies are arranged around the transport axis and are equidistant from the transport axis.

Preferably, the angular distance separating any two adjacent collecting assemblies remains unchanged during the rotation of the collecting assemblies about the transport axis.

Preferably, a number of collecting assemblies equal to the number of transfer devices are simultaneously present in the loading station.

In this way, all the transfer devices simultaneously transfer strip-like elements to collecting devices.

Preferably, in the loading station each transfer device is faced by a corresponding collecting device; the collecting devices faced by the transfer devices belong to different collecting assemblies.

Preferably, the action of transferring in separate and subsequent time instants each strip-like element from the respective transfer device to a respective collecting device of the first collecting assembly comprises moving the first collecting assembly along a loading path along which the transfer devices are arranged in sequence and having each collecting device of the first collecting assembly face, one after the other, a corresponding transfer device.

Preferably, moving a collecting assembly along the loading path includes rotating all the collecting assemblies about the transport axis.

Preferably, the rotation of all the collecting assemblies about the transport axis is carried out with continuity, i.e. a continuous, uninterrupted rotation.

In this case, the transfer of a strip-like element from each transfer device to a corresponding collecting device is implemented while the collecting assemblies are rotating about the transport axis.

Alternatively, the rotation of all the collecting assemblies about the transport axis is implemented step-by-step, i.e. with a rotation involving continuous movements alternating with breaks in motion.

In this case, the transfer of a strip-like element from each transfer device to a corresponding collecting device is implemented during the break in motion.

Preferably, when the transfer device first placed along the loading path transfers a strip-like element to a first collecting device of a collecting assembly, no strip-like element has yet been transferred to the other collecting devices of the same collecting assembly.

Preferably, the action of transferring each strip-like element from the respective transfer device to a respective collecting device of the first collecting assembly comprises rotating said respective collecting device about its own winding axis while facing the respective transfer device.

Preferably, the action of having each collecting device of the first collecting assembly face, one after the other, a corresponding transfer device comprises completing the transfer of a strip-like element from a transfer device to a collecting device of the first collecting assembly before having a further collecting device of the first collecting assembly face a further transfer device.

Preferably, when the transfer device that is placed second along the loading path transfers a strip-like element to a second collecting device of a collecting assembly, only the first collecting device of that collecting assembly has a strip-like element wound around it, while no strip-like element has yet been transferred to the other collecting devices of the same collecting assembly.

Preferably, when the transfer device that is placed third along the loading path transfers a strip-like element to a third collecting device of a collecting assembly, only the first and second collecting devices of that collecting assembly have a respective strip-like element wound while no strip-like element has yet been transferred to the other collecting devices of the same collecting assembly.

Preferably, when the transfer device that is placed fourth along the loading path transfers a strip-like element to a fourth collecting device of a collecting assembly, all the other collecting devices of the same collecting assembly have a respective strip-like element wound around it.

Preferably, the action of having each collecting device of the first collecting assembly face a corresponding transfer device one after the other comprises rotating all the collecting devices of the first collecting assembly about the support axis of the support structure when the first collecting assembly traverses the loading path.

Preferably, rotating all the collecting devices of the first collecting assemblies about the support axis of the support structure is implemented at least when the first collecting assembly moves between one transfer device and the next transfer device.

Preferably, during the transfer of a strip-like element from a transfer device to a collecting device of the first collecting assembly, a strip-like element is to be transferred from a different transfer device to a collecting device of a further collecting assembly.

Preferably, when the transfer device that is placed first along the loading path transfers a strip-like element to a collecting device of a first collecting assembly, the transfer device that is placed second along the loading path transfers a strip-like element to a collecting device of a second collecting assembly.

Preferably, when the transfer device that is placed second along the loading path transfers a strip-like element to a collecting device of a second collecting assembly, the transfer device that is placed third along the loading path transfers a strip-like element to a collecting device of a third collecting assembly.

Preferably, when the transfer device that is placed third along the loading path transfers a strip-like element to a collecting device of a third collecting assembly, the transfer device that is placed fourth along the loading path transfers a strip-like element to a collecting device of a fourth collecting assembly.

Further characteristics and advantages of the present invention will become clearer from the following detailed description of a preferred embodiment thereof, with reference to the appended drawings and provided by way of indicative and non-limiting example, wherein:
- Figure 1 is a schematic view of a winding apparatus for winding one or more strip-like separators and electrode foils together in accordance with the present invention:
- Figure 2 is a schematic view of the apparatus in Figure 1 with some parts removed to better highlight others;
- Figure 2A is a schematic view of a component of the apparatus in Figure 1; and
- Figures 3 to 10 are schematic views of the apparatus in Figure 1 in different operating steps.

The representations in the accompanying figures do not necessarily have to be understood in scale and do not necessarily respect the proportions between the various parts.

The apparatus 1 is preferably used to wind one or more strip-like separators and electrode foils together, which are used to make electrochemical cells, e.g. secondary electrochemical cells.

The apparatus 1 comprises a plurality of feeders 2 for feeding strip-like elements 100 each intended to form an anode 101, a cathode 102 or a strip-like separator 103 of dielectric material. The strip-like elements 100 are fed by the plurality of feeders 2 in the form of continuous strips.

The feeders 2 are connected to coils (not illustrated) onto each of which a respective strip-like element 100 is wound.

Each feeder 2 comprises a return roller 3 and an unwinding roller 4. The function of the return roller 3 is to accompany the strip-like element 100 towards the unwinding roller 4, causing the strip-like element to take a festoon-like path. Each return roller 3 can be moved to increase or decrease the length of this festoon, so as to create a buffer for the strip-like element fed to the unwinding roller 4.

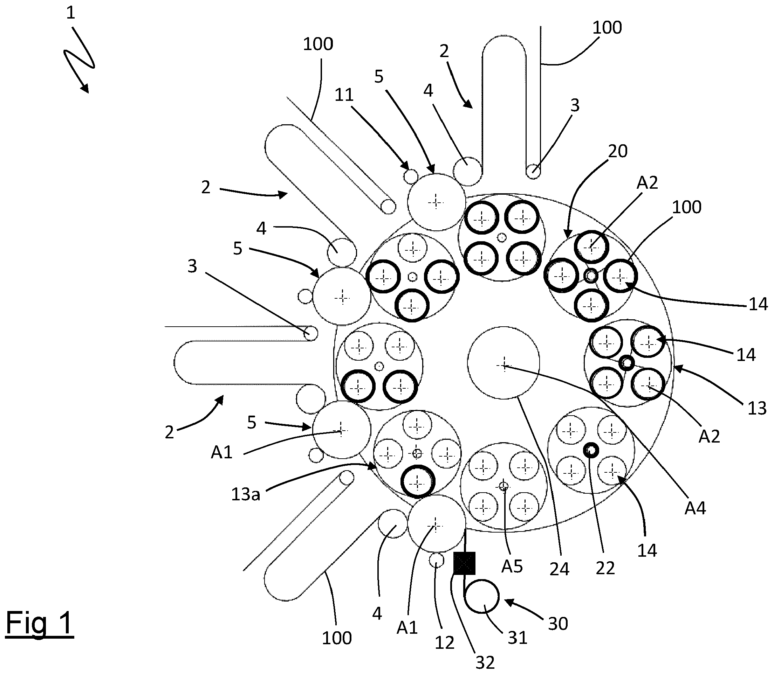

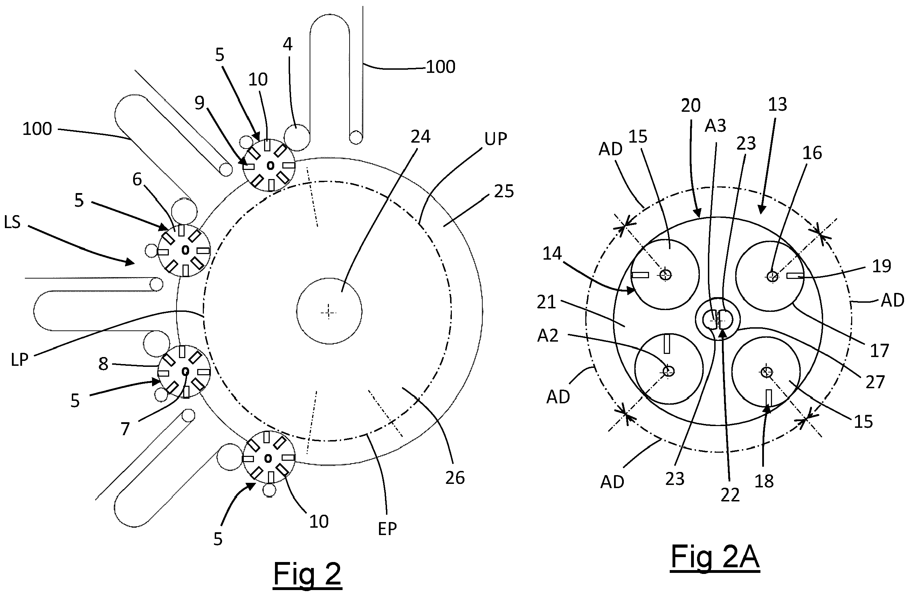

The apparatus 1 comprises a plurality of transfer devices 5. Each transfer device 5 is fed with a strip-like element 100 from the respective feeder 2. As depicted in Figures 1 and 2, the unwinding roller 4 of each feeder 2 feeds a respective strip-like element 100 to a corresponding transfer device 5. Each transfer device 5 is rotatable about its own transfer axis A1. The transfer axes A1 of all the transfer devices 5 are parallel to each other.

Each transfer device 5 comprises a transfer roller 6 rotatable about a transfer pivot 7 coinciding with the transfer axis A1. The transfer roller 6 comprises an outer surface 8 onto which the strip-like element 100 is fed by the unwinding roller 4.

As schematically illustrated in Figure 2, each transfer device 5 comprises a suction device 9 that can be activated on a portion of the strip-like element 100 to retain it. The suction device 9 can for example be formed by a plurality of suction devices 10 distributed on the outer surface 8 of the transfer roller 6. The suction device 9 has the task of retaining the strip-like element 100 during the rotation of the transfer device 5.

At each transfer device 5, the apparatus 1 comprises a cutting device 11 for cutting the strip-like element being transferred from the transfer device 5. The cutting device 11 can be a cutter or a rotary blade 12 (as depicted in Figure 2) configured to cut a strip-like element 100 and make a section of it. In the embodiment illustrated in Figure 2, the cutting device 11 is active on the transfer device 5, and in particular on the transfer roller 6, and is located downstream of the unwinding roller 4. In other embodiments not illustrated, the cutting device 11 can be placed upstream of the unwinding roller 4 to feed the transfer device 5 directly with sections of strip-like elements 100.

An adhesive tape feeder 30 (illustrated in Figure 1) is placed at a transfer device 5. The adhesive tape feeder 30 comprises a reel of adhesive tape 31 and a knife 32.

As illustrated in Figure 2, the transfer devices 5 are arranged one after the other in a loading station LS and along a loading path LP.

Each transfer device 5 is translatable perpendicular to the loading path LP. Each transfer device 5 is not movable in any other direction.

The apparatus 1 also comprises a plurality of collecting assemblies 13, including a first collecting assembly 13a shown in Figure 2A. The collecting assemblies 13 are identical to each other and, therefore, what is described below in relation to the first collecting assembly 13a is valid for any collecting assembly 13.

The first collecting assembly 13a comprises a plurality of collecting devices 14. The number of collecting devices 14 is equal to the number of transfer devices 5. Each collecting device 14 is rotatable about its own winding axis A2. The winding axes of all the collecting devices 14 are parallel to each other. Each collecting device comprises a collecting roller 15 rotatable about a winding pivot 16 coinciding with the winding axis A2. The collecting roller 16 comprises an outer surface 17 configured to receive a section of strip-like element 100 on it.

As schematically illustrated in Figure 2A, each collecting device 14 comprises a retaining device 18 that can be activated on a portion of the strip-like element 100 to retain it. The retaining device 18 can, for example, be formed by one or more suction devices 19 (only one suction device 19 is shown in Figure 2A) placed on the outer surface 17 of the collecting roller 15. The suction device 9 has the task of retaining the strip-like element 100 during the rotation of the transfer device 5.

The first collecting assembly 13a further comprises a support structure 20 for the collecting devices 14. The support structure 20 can be a plate or disc 21 (as shown in the accompanying figures) or a frame of any shape. The collecting devices 14 are rotatably constrained to the support structure 20 at the winding axes A2. In the preferred embodiment of the invention, the winding axes A2 are motorised to be able to rotate relative to the support structure 20. An electric motor (not shown) can be provided for each collecting device 14 or a single electric motor that drives all the collecting devices 14 in rotation relative to the support structure 14. The collecting rollers 15 are hinged to the support structure 14 at the respective winding pivots 16. As schematically illustrated in Figure 2A, the winding axes A2 are angularly distanced from each other by their respective angular distances AD, which always remain constant. These angular distances AD are identical to each other.

The first collecting assembly 13a comprises a winding mandrel 22 rotatably mounted relative to the support structure 20 around a forming axis A3. In the preferred embodiment of the invention, the winding mandrel 22 is rotatably mounted on the support structure 20 around the forming axis A3. The rotation of the winding mandrel 22 around the forming axis A3 is driven by an electric motor (not shown). The forming axis A3 is parallel to the winding axes A2. The winding mandrel 22 comprises two half-parts 23 that can be moved towards and away from each other to allow the free end of a strip-like element 100 to be inserted between the two half-parts 23 (by moving the two half-parts 23 apart) and retained between them (by bringing the two half-parts 23 together).

Each support structure 20 is rotatably mounted around a transport axis A4. For this purpose, the apparatus 1 comprises a motorised transport shaft 24 crossed by the transport axis A4. The support structures 20 are rotationally constrained to the transport shaft 24 and spaced from the transport axis A4. The support structures 20 are constrained to the transport shaft 24 by a transport structure 25, which can have any structure suitable for the purpose. In the embodiment illustrated in the accompanying figures (see, for example, Figure 2), the support structures 20 are constrained to the transport shaft 24 by a disc-shaped plate 26 onto which the transport shaft 24 is keyed. The transport axis A4 is parallel to the winding axes A2 of the collecting devices.

The support structures 20 are also rotatably constrained to the support structure 25 so that they can rotate about their own support axis A5 while rotating about the transport axis A4. Each support structure 20 comprises a support pivot 27 hinged to the transport structure 25 and motorised. The support axis A5 passes through the support pivot 27. The support axis A5 is parallel to the winding axes A2. The support axis A5 coincides with the forming axis A3 of the winding mandrel 22.

Each collecting device 14 is therefore rotatable about its own winding axis A2, about the support axis A5 of the respective support structure 20 and about the transport axis A4.

The support structures 20 rotate continuously about the transport axis A4 following a substantially circular path. At the transfer devices 5, the support structures 20 follow the loading path LP. While traversing the loading path LP, the support structures 20 rotate continuously about the support axis A5. While traversing the loading path LP, the collecting devices 14 rotate about the respective winding axes A2. The transfer devices 5 rotate about the transfer axes A1.

Along the loading path LP, the strip-like elements 100 are transferred, cut into sections, to the collecting devices 14 of a collecting assembly 13. Each transfer device 5 transfers a section of strip-like element 100 to a single collecting device 14 of a collecting assembly 13. The transfer of the strip-like elements 100 to the respective collecting devices 14 of the same collecting assembly 13 occurs at different and successive times during the loading path LP. In other words, the transfer of the strip-like elements 100 to the respective collecting devices 14 of the same collecting assembly 13 does not take place simultaneously. The transfer of a section of strip-like element 100 from a transfer device 5 to a collecting device 14 occurs by rotation of the collecting device 14 about its winding axis A2 and, simultaneously, about the transfer axis A1 of the transfer device 5.

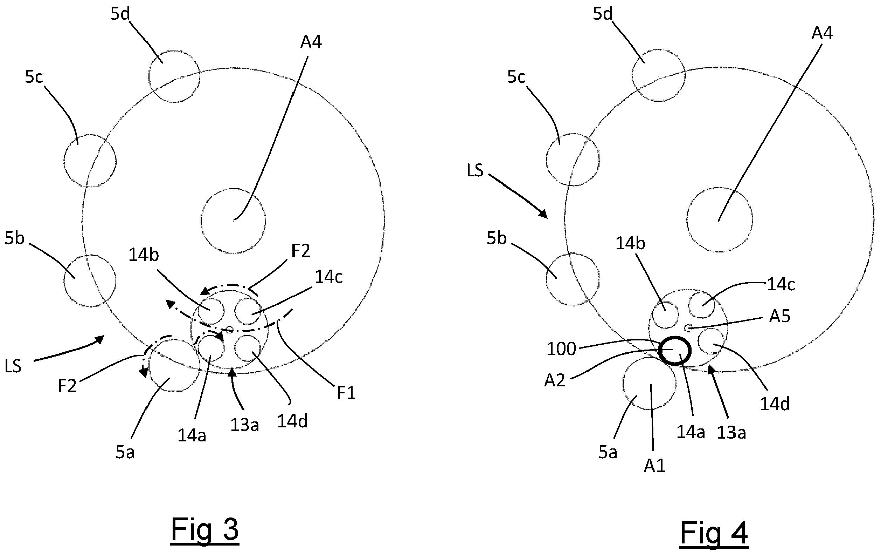

Referring to Figures 3 to 10, a method of winding strip-like elements onto the collecting devices of the first collecting assembly 13a is described. The above applies identically to any collecting assembly 13.

In the example shown, there are four collecting devices 14 and four transfer devices 5. The four collecting devices 14 are, respectively, a first collecting device 14a, a second collecting device 14b, a third collecting device 14c and a fourth collecting device 14d. The four transfer devices 5 are, respectively, a first transfer device 5a, a second transfer device 5b, a third transfer device 5c and a fourth transfer device 5d.

As the first collecting assembly 13a rotates about the transport axis A4, the first collecting assembly 13a reaches the loading station LS (Figure 3). The rotation of the first collecting assembly 13a about the transport axis A4 occurs in a first angular direction F1 (clockwise looking at Figure 3). The support structure 20 rotates about the support axis A5. This rotation occurs in a second angular direction F2 (anticlockwise looking at Figure 3) opposite the first angular direction F1. The first collecting device 14a rotates about its winding axis A2 in the first angular direction F1. As soon as the first collecting device 14a faces the first transfer device 5a, making contact with it (Figure 3), the transfer of a first section of strip-like element 100 to the first collecting device 14 begins. The first transfer device 5a is fed with the strip-like element 100 and rotates about its transfer axis A1 in the second angular direction F2. This rotation brings a free end of the strip-like element 100 into contact with the first collecting device 14a. The retaining device 18 of the first collecting device 14a retains the free end of the strip-like element 100. Simultaneously or previously, a portion of adhesive tape is cut from the reel of adhesive tape 31 by the knife 32 and fed to the first collecting device 14a and partially overlapped on the free end of the strip-like element 100. The rotation of the first collecting device 14a and the first transfer device 5a implements a winding of the strip-like element 100 onto the first collecting device 14a. This strip-like element 100 is a separator strip.

The rotation about the transport axis A4 of the first collecting assembly 13a leads the first collecting assembly to traverse the loading path LP. The first collecting device 14a continues to remain in contact with the first transfer device 5a (Figure 4). The first collecting device 14a continues to rotate about its own winding axis A2. The support structure 20 continues to rotate about its own support axis A5. The first transfer device 5a continues to rotate about its own transfer axis A1. The rotation of the support structure 20 about the support axis A5 and about the transport axis A4 has the effect that the first collecting device 14a (and in particular its winding axis A2) rotates about the transfer axis A1 of the first transfer device 5a. To avoid mechanical interference between the first collecting device 14a and the first transfer device 5a, the first transfer device 5a translates away from the transport axis A4 (as shown in Figure 4). This translation is of such a magnitude that the contact between the first collecting device 14a and the first transfer device 5a is not removed.

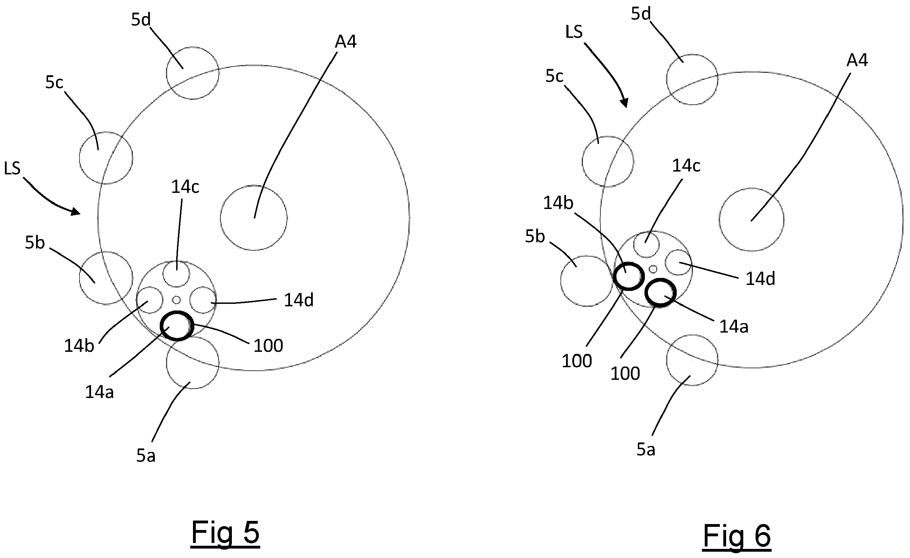

The further rotation about the transport axis A4 of the first collecting assembly 13a leads the first collecting assembly to travel further along the loading path LP. The first collecting device 14a continues to remain in contact with the first transfer device 5a (Figure 5). The first collecting device 14a continues to rotate about its own winding axis A2. The support structure 20 continues to rotate about its own support axis A5. The first transfer device 5a continues to rotate about its own transfer axis A1. The rotation of the support structure 20 about the support axis A5 and about the transport axis A4 has the effect that the first collecting device 14a (and in particular its winding axis A2) continues to rotate about the transfer axis A1 of the first transfer device 5a. To continue to maintain contact between the first collecting device 14a and the first transfer device 5a, the first transfer device 5a translates towards the transport axis A4 (as shown in Figure 5). This translation is of such a magnitude that it returns the first transfer device 5a to its initial position. After, before or simultaneously with the return of the first transfer device 5a to its initial position, the cutting device 11 cuts the strip-like element 100 longitudinally, producing a section of strip-like element 100.

When the end portion of the section of strip-like element 100 has been wound onto the first collecting device 14a, the winding of the section of strip-like element 100 onto the first collecting device 14a is completed. At this instant, the first collecting device 14a is still in contact with the first transfer device 5a (Figure 5). At a later instant, the rotation of the support structure 20 about the support axis A5 and about the transport axis A4 breaks contact between the first collecting device 14a and the first transfer device 5a. When the section of strip-like element 100 is fully wound onto the first collecting device 14a, the winding axis A2 of the first collecting device 14a is rotated through an angle comprised between 80° and 120° about the transfer axis A1 of the first transfer device 5a.

A further rotation of the support structure 20 about the support axis A5 and about the transport axis A4 brings the second collecting device 14b into contact with the second transfer device 5b.

What is described in relation to the first collecting device 14a and the first transfer device 5a applies identically to the second collecting device 14b and the second transfer device 5b. Figure 6 schematically illustrates the instant in which the second transfer device 5b is moved away from the transport axis A4 with the second collecting device 14b in contact with the second transfer device 5b. Note that during the winding of a section of strip-like element 100 onto the second collecting device 14b, a section of strip-like element 100 has already been wound onto the first collecting device 14a. The strip-like element 100 transferred to the second collecting device 14b is an electrode foil.

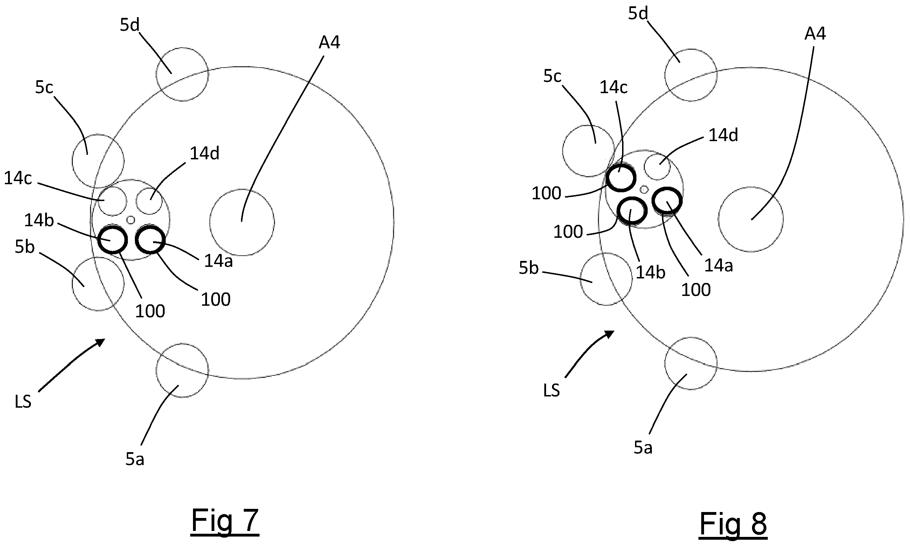

What is described in relation to the first collecting device 14a and the first transfer device 5a also applies identically to the third collecting device 14c and the third transfer device 5c. Figure 7 schematically illustrates the instant when the third transfer device 5c makes contact with the third collecting device 14c. Figure 8 schematically illustrates the instant when the third transfer device 5c is moved away from the transport axis A4 with the third collecting device 14c in contact with the third transfer device 5c. Note that during the winding of a section of strip-like element 100 onto the third collecting device 14c, a section of strip-like element 100 has already been wound onto the first collecting device 14a and the second collecting device 14b. The strip-like element 100 transferred to the third collecting device 14c is a separator tape.

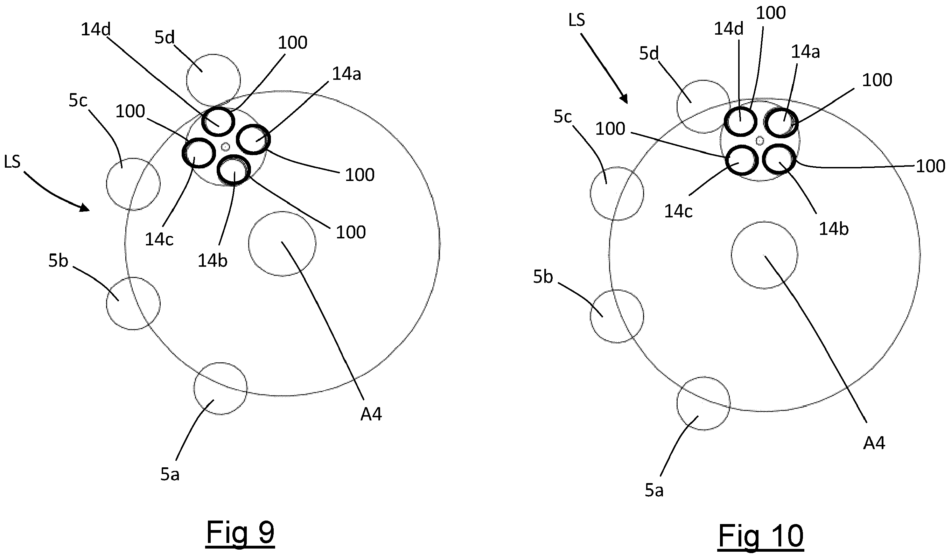

Again, what is described in relation to the first collecting device 14a and the first transfer device 5a also applies identically to the fourth collecting device 14d and the fourth transfer device 5d. Figure 9 schematically illustrates the instant when the fourth transfer device 5d is moved away from the transport axis A4 with the fourth collecting device 14d in contact with the fourth transfer device 5d. Figure 10 schematically illustrates the instant in which a section of strip-like element 100 has been completely wrapped around the fourth collecting device 14d. Note that during the winding of a section of strip-like element 100 onto the fourth collecting device 14d, a section of strip-like element 100 has already been wound onto the first collecting device 14a, the second collecting device 14b and the third collecting device 14c. The strip-like element 100 transferred to the fourth collecting device 14d is an electrode foil.

Between the beginning of the winding of a strip-like element 100 onto the first collecting device 14a of the first collecting assembly 13a and the completion of the winding of a strip-like element 100 onto the last collecting device 14d of the first collecting assembly 13a, the respective support structure 20 performs a rotation of 360° about the support axis A5. Between the beginning of the winding of a strip-like element 100 onto a first collecting device 14a of any collecting assembly 13 and the completion of the winding of a strip-like element 100 onto the last collecting device 14d of the same collecting assembly 13, the respective support structure 20 completes a rotation of 360° about the support axis A5. While traversing the loading path LP, each support structure 20 completes a rotation of 360° about the support axis A5.

When the winding of a strip-like element 100 onto the last collecting device 14d of the first collecting assembly 13a has been completed, the rotation of the support structure 20 about the transport axis A4 leads the first collecting assembly 13a to traverse an unwinding path UP (illustrated in Figure 2) which follows the loading path LP.

During the unwinding path UP, the sections of strip-like element 100 wound onto the collecting devices 14 are unwound from the latter and wound around the winding mandrel 22. During this operation, the support structure 20 rotates about the transport axis A4. In addition, during this operation, the collecting devices 14 rotate about their winding axes A2 and the winding mandrel 22 rotates about the forming axis A3.

Once the winding of the strip-like elements 100 onto the winding mandrel 22 is complete, the portion of adhesive tape not overlapping the free end of the strip-like element 100 carried by the first collecting device 14a is fixed to keep the strip-like elements 100 wound onto each other.

Once the winding of the strip-like elements 100 onto the winding mandrel 22 is complete, the rotation of the support structure 20 about the transport axis A4 causes the first collecting assembly 13a to traverse an extraction path EP (illustrated in Figure 2) that follows the unwinding path UP. While traversing the extraction path EP the strip-like elements 100 wrapped together around the winding mandrel 22 are extracted from the winding mandrel 22 and transferred to subsequent processing stations.

Once the extraction of the strip-like elements 100 from the winding mandrel 22 has been completed, the rotation of the support structure 20 about the transport axis A4 brings the first collecting assembly 13a back along the loading path LP and recommences the cycle described.

The above applies identically to any collecting assembly 13.

In the loading station LS there are simultaneously a number of collecting assemblies 14 equal to the number of transfer devices 5 (as shown in Figure 1). Each transfer device 5 operates on a collecting device 14 of a respective collecting assembly 13 in the manner described above. Therefore, all the transfer devices 5 operate simultaneously on collecting devices 14 each of the collecting devices 14 belonging to a different collecting assembly 13.

## Claims

1. Winding apparatus (1) for winding one or more strip-like separators and electrode foils to each other comprising:
a loading station (LS);
a plurality of transfer devices (5) wherein each transfer device (5) is configured to receive and transfer an electrode foil or strip-like separator and wherein the transfer devices (5) are arranged in sequence along a loading path (LP) in said loading station (LS);
a first collecting assembly (13a) movable along said loading path (LP) and comprising a support structure (20) on which a plurality of collecting devices (14) are arranged;
each collecting device (14) being rotatable about its own winding axis (A2) relative to the support structure (20) and being configured to receive from a transfer device (5) an electrode foil or a strip-like separator;
said support structure (20) rotating about its own support axis (A5) at least when it is in said loading station (LS) to face each collecting device (14), one after the other, to a corresponding transfer device (5).

2. Winding apparatus (1) according to claim 1, wherein said winding axes (A2) of the collecting devices (14) rotate about said support axis (A5) of the support structure (20) at least when they are in said loading station (LS).

3. Winding apparatus (1) according to claim 1 or 2, wherein said support structure (20) is rotatable about a transport axis (A4) to travel along said loading path (LP); said support structure (20) rotating about its own support axis (A5) and about said transport axis (A4) at least when the first collecting unit (13a) travels along the loading path (LP).

4. Winding apparatus (1) according to any one of the preceding claims, wherein when a collecting device (14) of said first collecting assembly (13a) is facing a respective transfer device (5), the other collecting devices (14) of said first collecting assembly (13a) are not facing any transfer device (5).

5. Winding apparatus (1) according to any one of the preceding claims, wherein the first collecting assembly (13a) comprises a winding mandrel (22); said collecting devices (14) being arranged about said winding mandrel (22) at least when the first collecting assembly (13a) travels along the loading path (LP).

6. Winding apparatus (1) according to claim 5, comprising an unwinding path (UP) traversed by said first collecting assembly (13a) after traversing the loading path (LP); the collecting devices (14) being arranged and configured to transfer to said winding mandrel (22) electrode foils and strip-like separators while traversing along the unwinding path (UP).

7. Apparatus (1) according to any one of the preceding claims, comprising a plurality of collecting assemblies (13) each of which is movable along said loading path (LP) and each of which comprises a respective support structure (20) on which a plurality of collecting devices (14) are arranged;
each collecting device (14) of a collecting assembly (13) being rotatable about its own winding axis (A2) relative to the respective support structure (20) and being configured to receive from a transfer device (5) an electrode foil or strip-like separator;
the support structure (20) of each collecting assembly (13) rotating about its own support axis (A5) at least when it is in said loading station (LS) to face each collecting device (14), one after the other, to a corresponding transfer device (5).

8. Apparatus (1) according to claim 7, wherein in the loading station (LS) are simultaneously present a number of collecting assemblies (13) equal to the number of the transfer devices (5).

9. Apparatus (1) according to claim 8, wherein in the loading station (LS) each transfer device (5) is faced by a corresponding collecting device (14); the collecting devices facing the transfer devices (5) belonging to different collecting assemblies (13).

10. Method for wrapping one or more strip-like separators and electrode foils to each other comprising:
feeding strip-like elements (100) each of which defining an electrode foil or a strip-like separator to respective transfer devices (5);
transferring in separate and successive time instants each strip-like element (100) from the respective transfer device (5) to a respective collecting device (14) of a first collecting assembly (13a);
unwinding the strip-like elements (100) from each collecting device (14) of the first collecting assembly (13a) and winding them onto a winding mandrel (22).

11. Method according to claim 10, wherein transferring in separate and subsequent time instants each strip-like element (100) from the respective transfer device (5) to a respective collecting device (14) of the first collecting assembly (13a) comprises moving the first collecting assembly (13a) along a loading path (LP) along which the transfer devices (5) are arranged in sequence and facing each collecting device (14) of the first collecting assembly (13a), one after the other, to a corresponding transferring device (5).

12. Method according to claim 11, wherein facing each collecting device (14) of the first collecting assembly (13a), one after the other, to a corresponding transfer device (5) comprises completing the transfer of a strip-like element (100) from a transfer device (5) to a collecting device (14) of the first collecting assembly (13a) before facing a further collecting device (14) of the first collecting assembly (13a) to a further transfer device (5).

13. Method according to claim 11 or 12, wherein facing each collecting device (14) of the first collecting assembly (13a) face, one after the other, to a corresponding transfer device (5) comprises rotating all the collecting devices (14) of the first collecting assembly (13a) about a support axis (A5) when the first collecting assembly (13a) travels along the loading path (LP).

14. Method according to any one of claims 10 to 13, wherein transferring each strip-like element (100) from the respective transfer device (5) to a respective collecting device (14) of the first collecting assembly (13a) comprises rotating said respective collecting device (14) about its own winding axis (A2) while it is facing the respective transfer device (5).

15. Method according to any one of claims 10 to 14, comprising, during transferring a strip-like element (100) from a transfer device (5) to a collecting device (14) of the first collecting unit (13a), transferring a strip-like element (100) from a different transfer device (5) to a collecting device (14) of a further collecting assembly (13).
